# EUROPEAN PATENT APPLICATION

(11) **EP 1 152 320 A1**
(43) Date of publication of application: **07.11.2001**
(21) Application number: 00900408.6
(22) Date of filing: 17.01.2000
(51) Int. Cl.: G06F 1/26, G06F 3/00

(54) **POWER SWITCH CIRCUIT AND ELECTRONIC DEVICE**

(30) Priority: 19.01.1999 JP 1063599
(71) Applicant: Nikon Corporation, Tokyo 100-8831 (JP)
(72) Inventor: KUROIWA, Toshihisa, Nikon Corporation, Tokyo 100-8331 (JP)
(74) Representative: Walaski, Jan Filip
(86) International application number: JP0000169
(87) International publication number: WO0043859

(57) **Abstract**

When a card detection unit of an electronic device detects that a PC card is mounted, an MPU sets an output signal Stime at one of the output ports from L level to H level after a predetermined length of time elapses following the detection. A switch drive circuit turns on a power supply switch when the signal Stime shifts to H level, and immediately turns off the power supply switch if it is detected that no PC card is mounted. As a result, the electric shock to the card-type electronic circuit can be minimized when mounting/dismounting the PC card in/from the electronic device.

## Description

### INCORPORATION BY REFERENCE

The disclosure of the following priority application is herein incorporated by reference:
Japanese Patent Application No. H 11-10635 filed January 19, 1999.

### TECHNICAL FIELD

The present invention relates to a power supply switch circuit that is employed to supply power to a card electronic circuit which is detachably mounted at an electronic device and an electronic device having such a power supply switch circuit.

### BACKGROUND ART

Card-type electronic circuits such as PC cards and CF cards used in electronic devices including personal computers, digital cameras and information terminal devices are each constituted by internally mounting an electronic circuit in a card-size package. Such a card-type electronic circuit is connected to a circuit within the electronic device via a connector provided at the electronic device. The electronic device is internally provided with a power supply circuit from which power to be used in the card-type electronic circuit is supplied, a power supply switch that turns ON/OFF the power supplied to the card-type electronic circuit, a card detection unit that detects whether or not a card-type electronic circuit is mounted in the electronic device, an MPU that implements control on the card-type electronic circuit and the power supply switch in the electronic device and an interface circuit that achieves an interface for instruction communication and data communication between the MPU and the card-type electronic circuit.

In case that an electronic device is preprogrammed to implement control by sensing the presence of a card-type electronic circuit, the electronic device detects the presence of the card-type electronic circuit to start control on the card-type electronic circuit when a card-type electronic circuit is mounted after the electronic device has been turned on.

The connector used to connect the electronic device and the card-type electronic circuit includes a plurality of connector pins assigned for input/output signal exchange and power supply, and these connector pins are fitted at connector contacts provided at the card-type electronic circuit. The connector pins may be provided in, for instance, three different lengths, with the connector pin group with the greatest length utilized for the power supply terminals and the GND terminals, the connector pin group with the second greatest length used for the signal terminals and the connector pin group with the least length utilized for the card- type electronic circuit present/absent detection signal terminals.

When a card-type electronic circuit is inserted at such a connector in the electronic device with the power turned on, the power supply terminals and the GND terminals become connected first. Once the power supply terminals and the GND terminals are connected, the signal terminals are connected and then finally the present/absent detection signal terminals provided at the two ends of the connector become connected. The MPU at the electronic device detects that a card-type electronic circuit has been mounted based upon the signal levels at the present/absent detection signal terminals. When it is judged that a card-type electronic circuit is mounted, the power supply switch is first turned on to supply power to the cardtype electronic circuit and then the control on the card-type electronic circuit is commenced. In order to prevent an inadvertent leak current or the like, the electronic device does not turn on the power supply switch unless it is detected that the card-type electronic circuit is mounted. When the card-type electronic circuit is dismounted, on the other hand, the connections at the present/absent detection signal terminals are first cut off and then the connections of the power supply terminals and the GND terminals are cut off. Once the connection at the present/absent detection signal terminals are cut off, the electronic device turns off the power supply switch to stop the power supply to the card-type electronic circuit.

As described above, by utilizing a connector having connector pins with various lengths, it is ensured that the electric shock to the electronic device and the card-type electronic circuit is minimized even if the card-type electronic circuit is mounted or dismounted while the power to the electronic device is on.

### DISCLOSURE OF THE INVENTION

However, when the card-type electronic circuit is actually being mounted in or dismounted from the electronic device, a chattering phenomenon may occur at the contact points of the connector, in which contact and noncontact states alternate repeatedly over several tens of msec. As a result, when the presence of the card-type electronic circuit is detected by the card detection unit by using the present/absent detection signal which indicates the presence/absence of the card-type electronic circuit and the power supply to the card-type electronic circuit is switched, the power supply switch repeatedly alternates an ON state and an OFF state over a short period of time. This presents a risk of electric shock to the electronic device and the circuits inside the card-type electronic circuit.

An object of the present invention is to provide a power supply switch circuit that is capable of minimizing the electric shock attributable to chattering occurring when a detachable card-type electronic circuit is mounted or dismounted and an electronic device having such a power supply switch circuit.

In order to achieve the object described above, the power supply switch circuit or the electronic device according to the present invention comprises a switch circuit that turns ON/OFF a power supply to an external electronic circuit which is detachably mounted in the electronic device, a detection circuit that detects whether or not the external electronic circuit is mounted and a switch control circuit that closes the switch circuit when a specific length of time elapses after the detection circuit detects that the external electronic circuit is mounted and immediately opens the switch circuit if it is detected that no external electronic circuit is mounted.

It is desirable to further provide an input/output unit that is capable of switching an input/output signal to the external electronic circuit to a signal connecting state in which the signal is able to be input/output or a high impedance state. In this case, the input/output unit is switched to the signal connecting state if the switch circuit is closed and is switched to the high impedance state if the switch circuit is open.

In addition, the switch control circuit may include a flip-flop circuit. When the detection circuit detects that an external electronic circuit is mounted, the output of the flip-flop circuit is set after a predetermined length of time elapses to close the switch circuit, whereas if it is detected that the external electronic circuit is not mounted, the output of the flip-flop circuit is immediately reset to open the switch circuit.

The external electronic circuit is constituted of a PC card or a CF card. In conjunction with such an external electronic circuit, a connector of the electronic device at which the external electronic circuit is mounted may include a longest pin for power supply, a medium-length pin for data exchange and a shortest pin for detecting the presence/absence of the external electronic circuit to enable the detection circuit to detect the presence/absence of the external electronic circuit based upon a signal provided through the shortest pin.

According to the present invention, the power supply to the external electronic circuit starts when the predetermined length of time elapses after an external electronic circuit is mounted in the electronic device, and the power to the external electronic circuit is immediately cut off when the external electronic circuit is dismounted from the electronic device. Consequently, it is possible to lessen the electric shock to the external electronic circuit when mounting/dismounting the external electronic circuit at the electronic device.

In addition, by providing the input/output unit that achieves a signal connecting state for the impedance to the external electronic circuit during a power supply and achieves a high impedance state when the power is not being supplied, it is ensured that no unnecessary current flows if the external electronic circuit is not mounted to achieve a reduction in the power consumption and to lessen the electric shock attributable to the chattering phenomenon.

### BRIEF DESCRIPTION OF THE DRAWINGS

FIG. 1 is a block diagram of the power supply switch circuit in an embodiment of the present invention;
FIG. 2 shows the connector at the electronic device and the connector at the card-type electronic circuit;
FIG. 3 presents a specific example of a switch drive circuit constituted by utilizing a flip-flop circuit; and
FIG. 4 is a time chart of the card-type electronic circuit present/absent detection signal and the power supply switch control signal.

### BEST MODE FOR CARRYING OUT THE INVENTION

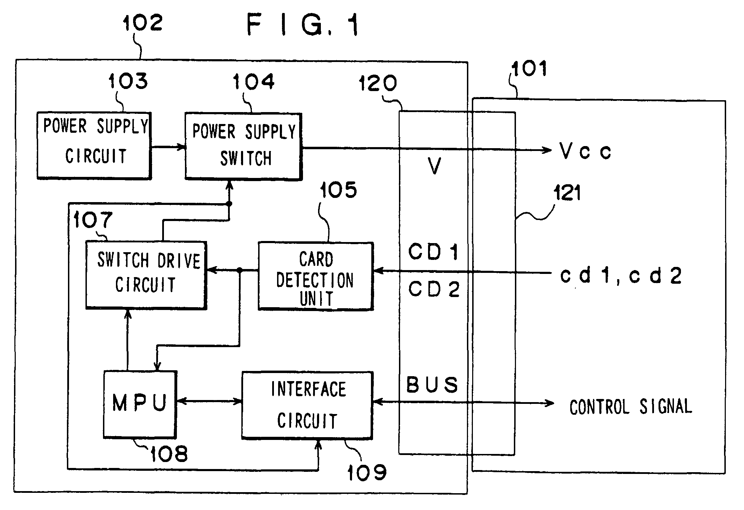

The following is an explanation of an embodiment of the present invention, given in reference to the drawings. FIG. 1 is a block diagram of the power supply switch circuit in the embodiment of the present invention. An electronic device 102 is provided with a connector 120 at which a detachable card-type electronic circuit (also referred to as an external electronic circuit) 101 such as a PC card or a CF card is mounted. The electronic device 102 is also provided with a power supply switch circuit employed to supply power to the card-type electronic circuit 101. This power supply switch circuit comprises a power supply circuit 103 constituting a source of power to be supplied to the card- type electronic circuit 101, a power supply switch 104 that is provided in the middle of the path through which the output from the power supply circuit 103 is supplied to the connector 120 and turns ON/OFF the output of the power supply circuit 103, a card detection unit 105 that detects whether or not the card-type electronic circuit 101 is mounted, a switch drive circuit 107 that controls the power supply switch 104, an MPU 108 that outputs ON/OFF instructions for turning ON/OFF the power supply switch 104 to the switch drive circuit 107 and implements control on the card-type electronic circuit 101 and an interface circuit 109 provided between the MPU 108 and the connector 120.

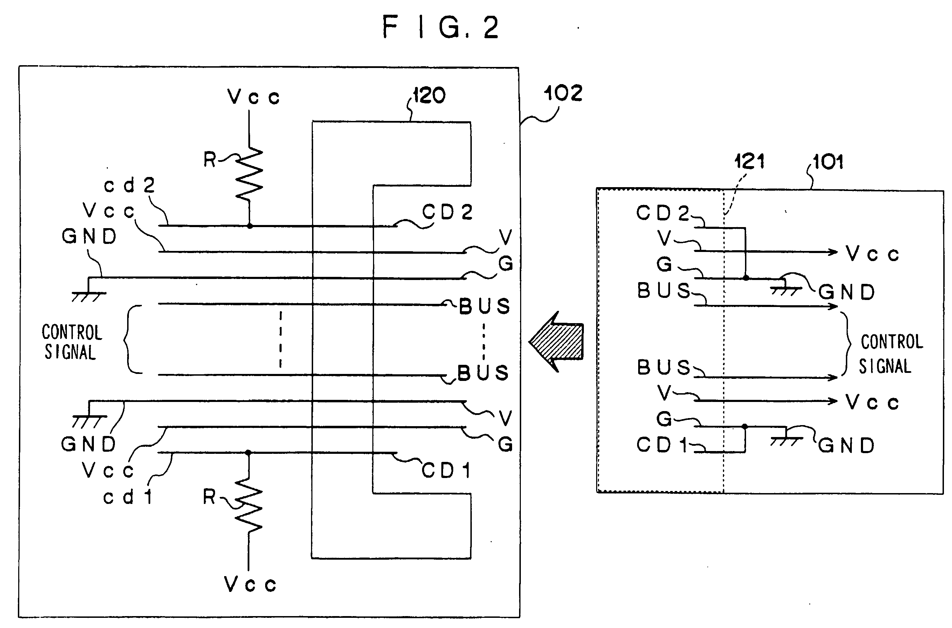

As shown in FIG. 2, the connector 120 of the electronic device 102 includes connector pins having three different lengths. The longest pins are utilized as power supply terminals V and ground terminals G. The medium length pins are utilized for control signal terminals BUS. The shortest pins are utilized for present/absent detection signal terminals CD1 and CD2.

At a connector 121 of the card-type electronic circuit 101, input/output terminals that include power supply terminals V, ground terminals G, card detection signal terminals CD1 and CD2 and control signal terminals (for the address bus, the data bus and control signals) BUS for implementing control on the card-type electronic circuit 101 are provided.

As shown in FIG. 2, by inserting the connector 121 of the card-type electronic circuit 101 at the connector 120 of the electronic device 102, the individual terminals inside the connector 121 of the card-type electronic circuit 101 becomes connected to the pins at the connector 120 of the electronic device 102. When the card-type electronic circuit 101 is inserted at the electronic device 102, the electronic device 102 and the card-type electronic circuit 101 become connected with each other via the three types of pins described earlier. First, via the longest pins, the power supply terminals V and the ground terminals G become connected. Next, the control signal terminals BUS become connected via the medium length pins and finally, the present/absent detection signal terminals CD1 and CD2 are connected via the shortest pins.

The present/absent detection signal terminals CD1 and CD2 of the card-type electronic circuit 101 are each internally connected to a ground terminal G. The present/absent detection terminals CD1 and CD2 at the electronic device 102, on the other hand, are each pulled up to the source Vcc via a resister R. Thus, by checking the levels of these terminal signals with the card detection unit 105 which is to be detailed later provided at the electronic device 102, a detection can be performed to ascertain whether or not the card-type electronic circuit 101 is connected to the electronic device 102. Namely, if the card-type electronic circuit 101 is connected, the signals detected at the present/absent detection signal terminals CD1 and CD2 indicate the ground GND level. If, on the other hand, the card-type electronic circuit 101 is not connected, the signals at the present/absent detection signal terminals CD1 and CD2 are detected to indicate the source Vcc level. The present/absent detection signals detected by the card detection unit 105 are referred to as cd1 and cd2.

The card detection unit 105 in the electronic device 102 performs a detection as to whether or not the card-type electronic circuit 101 is connected as described above and outputs the results of the detection to the MPU 108 and the switch drive circuit 107. If it is judged based upon the output from the card detection unit 105 that the card-type electronic circuit 101 is mounted, the switch drive circuit 107 waits for a power ON instruction to be output from the MPU 108 and after receiving the power ON instruction, the switch drive circuit 107 outputs a switch ON signal to the power supply switch 104. If, on the other hand, it is decided based upon the output from the card detection unit 105 that the card-type electronic circuit 101 is not mounted, the switch drive circuit 107 immediately outputs a switch OFF signal to the power supply switch 104. In addition, when outputting a signal to turn ON/OFF the power supply switch 104, the switch drive circuit 107 also outputs the ON/OFF signal to the interface circuit 109.

The interface circuit 109 switches the state of an input/output buffer in conformance to the ON/OFF signal input thereto. In other words, the interface circuit 109 sets the input/output buffer in a signal connecting state if the power supply switch 104 is in an ON state, whereas the interface circuit 109 sets the input/output buffer in a high impedance state if the power supply switch 104 is in an OFF state. For this reason, the circuit of the input/output buffer at the interface circuit 109 is constituted by using a three-state buffer that can be set in a high impedance state.

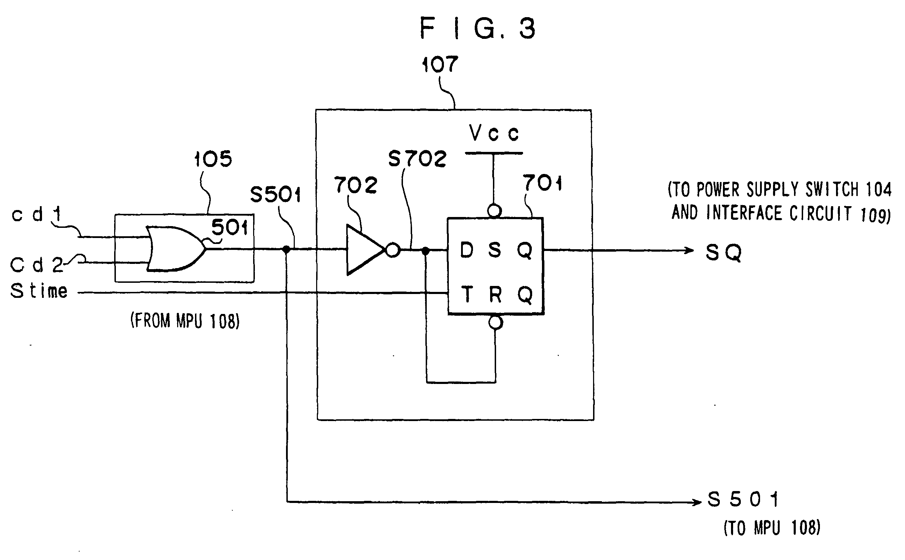

Specific examples of the card detection unit 105 and the switch drive circuit 107 explained above are now described in reference to FIG. 3. The switch drive circuit 107 in the figure is constituted of a data-type flip-flop 701 and an invertor 702. A set terminal S of the flip-flop 701 achieves a pull-up connection to the source Vcc and is not engaged in operation in the circuit in this embodiment. An inversion output terminal Q is not engaged in operation either. The card detection unit 105, constituted of an OR gate 501, to which the present/absent detection signals cd1 and cd2 are input, outputs a signal S501 that is the OR of the present/absent detection signals cd1 and cd2.

When the card-type electronic circuit 101 is mounted, both the present/absent detection signals cd1 and cd2 are set to L level and, as a result, the output signal S501 output through the gate 501 shifts to L level. This output signal S501 is inverted at the invertor 702 of the switch drive circuit 107 and is then input to a reset terminal R and a data input terminal D of the flip-flop 701 as a signal S702 at H level. Since the signal S702 at H level is input to the data input terminal D as the reset is cleared, an output signal SQ output through an output terminal Q shifts to H level when a signal at a rising edge is input to a clock terminal T in this state, to turn on the power supply switch 104.

If the card-type electronic circuit 101 is not mounted, at least either the present/absent detection signal cd1 or the present/absent detection signal cd2 is set to H level and, as a result, the output signal S501 output through the gate 501 shifts to H level. This output signal S501 is inverted at the invertor 702 and is then input to the reset terminal R of the flip-flop 701 as a signal S702 at L level. Thus, the flip-flop 701 is reset, the output signal from the output terminal Q shifts to L level and the power supply switch 104 is turned off.

The signal S501, which is the OR of the present/absent detection signals cd1 and cd2 as described above, is input through the gate 501 of the card detection unit 105 to one of the external interrupt input ports of the MPU 108. The MPU 108 starts a count of the elapsing time by employing an internal timer circuit (not shown) upon receiving the signal S501 at L level indicating that the card-type electronic circuit 101 is mounted. Then, when a predetermined length of time, e.g., 0.1 sec, has elapsed, the MPU 108 issues an instruction to the switch drive circuit 107 to turn on the power supply switch 104 by setting a signal Stime output through one of the output ports of the MPU 108 to H level.

Since the signal Stime is input to the clock terminal T of the flip-flop 701, the output signal SQ output through the output terminal Q is set to H level if the input signal Stime at the clock terminal T shifts to H level while the signal S702 at H level is input to the input data terminal D as described earlier, to turn on the power supply switch 104.

The timer circuit at the MPU 108 starts a count when the output signal S501 at the gate 501 of the card detection unit 105 shifts to L level and continues the count started in response to the initial shift to L level even if a new input that will set the signal S501 to H level and then sets it back to L level is detected during the count. In addition, the predetermined length of time, i.e., 0.1 sec is sufficiently greater than the length of the chattering period that occurs during a normal card mounting/dismounting operation.

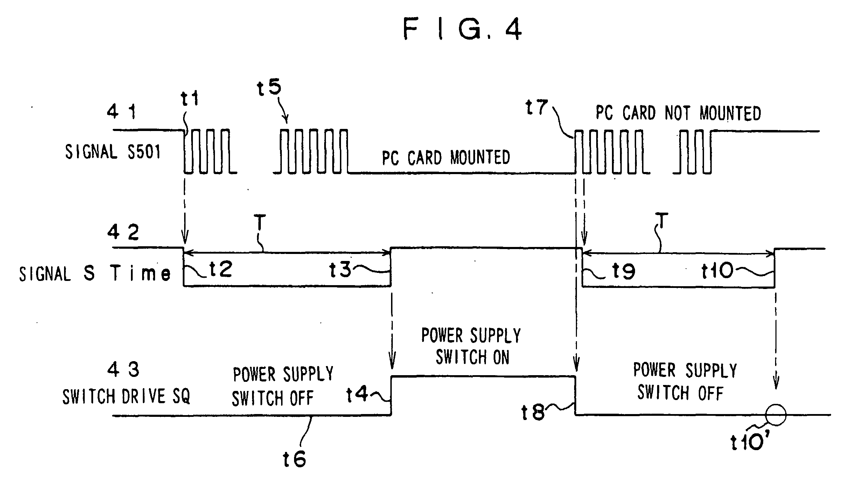

The output signal SQ from the flip-flop 701 is used as a trigger for switching the state of the input/output buffer of the interface circuit 109. The operation of the power supply switch circuit is now explained in reference to the time chart presented in FIG. 4. A waveform 41 is a waveform of the signal S501 output through the gate 501 of the card detection unit 105 and provided to the MPU 108 and the switch drive circuit 107. A waveform 42 is a waveform of the signal Stime that is output in conformance to the operation of the timer circuit at the MPU 108 and constitutes a switch ON/OFF instruction to the switch drive circuit 107. A waveform 43 is a waveform of the signal SQ that is output from the output terminal Q of the flip-flop 701 at the switch drive circuit 107 and constitutes an ON/OFF drive signal to be provided to the power supply switch 104.

### -When A Card-Type Electronic Circuit Is Mounted-

When the card-type electronic circuit 101 is mounted in the electronic device 102, the signal S501 (see the waveform 41) the level of which conforms to the states of the present/absent detection signals cd1 and cd2 are output to the switch drive circuit 107 from the card detection unit 105. In FIG. 4, when a first fall t1 of the waveform 41 that indicates that the card-type electronic circuit 101 is mounted is detected by the MPU 108, the MPU 108 starts the timer circuit (not shown) and sets the signal Stime output through one of the output ports to L level (t2 in the waveform 42). When the predetermined length of time T is counted up at the timer circuit, the MPU 108 issues a switch ON instruction by setting the signal Stime to H level (t3 in the waveform 42) . The switch drive circuit 107 outputs the signal SQ at H level in order to turn on the power supply switch 104 in synchronization with the rising edge t3 of the signal Stime (t4 in the waveform 43). Upon receiving the high-level signal SQ, the power supply switch 104 is turned on, i.e., the power supply switch 104 becomes closed, to supply power to the card-type electronic circuit 101. During the time period spanning t1 through t4 in FIG. 4, no change occurs in the drive signal SQ (t6 in the waveform 43) provided to the power supply switch 104 even if the level of the signal S501 output from the card detection unit 105 changes due to chattering (t5 in the waveform 41).

### -When No Card-Type Electronic Circuit Is Mounted-

When a first rise (t7 in the waveform 41) of the waveform 41 indicating that the card-type electronic circuit 101 is not mounted is input to the switch drive circuit 107, the input signal at the reset terminal R of the flip-flop 701 shifts to L level, the flip-flop 701 immediately sets the drive signal SQ to L level (t8 in the waveform 43) and the switch drive circuit 107 turns off, i.e., opens, the power supply switch 104. If the waveform 41 manifests a fall due to chattering following t7 in the waveform 41, the MPU 108 changes the level of the signal Stime to L level (t9 in the waveform 42), and after counting up the predetermined length of time T with the timer circuit as explained earlier, it resets the signal Stime to H level (t10 in the waveform 42). However, if, at this point, the signal S501 is at H level and thus indicates that the card-type electronic circuit 101 is not mounted, an L level signal is input to the data input terminal D of the flip-flop 701 and thus, no change occurs with regard to the state of the flip-flop 701, thereby allowing the drive signal SQ for the power supply switch 104 to remain at L level (t10' and the waveform 43).

While a data input-type flip-flop is employed in the specific example of the switch drive circuit 107 described above, the switch drive circuit 107 may be constituted by using an RS type flip-flop or a JK type flip-flop. In addition, while the power supply switch 104 is turned on after waiting over a period of time during which the chattering phenomenon occurs by utilizing the timer circuit of the MPU 108 in the embodiment, the output signal S501 from the card detection unit 105 may be monitored instead to turn on the power supply switch 104 after the output signal S501 becomes stabilized at L level indicating the presence of the card- type electronic circuit 101.

Advantages achieved in the embodiment are explained.
(1) Since the power supply switch 104 is not turned on until chattering stops after the card-type electronic circuit 101 is mounted in the electronic device 102, the electric shock to the electronic device 102 and the card-type electronic circuit 101 attributable to the chattering phenomenon can be lessened.
(2) When the card-type electronic circuit 101 is mounted in the electronic device 102, the specific length of time to elapse before turning on the power supply switch 104 is set by the MPU 108, and thus, the optimal length of time that corresponds to the length of time over which the chattering phenomenon manifests can be set.
(3) Since the power supply switch 104 is turned off in response to the first signal indicating a dismounted state when the card-type electronic circuit 101 is dismounted from the electronic device 102, the electric shock to the electronic device 102 and the card-type electronic circuit 101 attributable to the chattering phenomenon is reduced.
(4) Since the input/output buffer 109 is switched to the signal connecting state /high impedance state in conformance to the ON/OFF state of the power supply switch 104, no unnecessary current is allowed to flow through the input/output buffer 109 if the card-type electronic circuit 101 is not mounted, to achieve a reduction in the power consumption and a reduction in the electric shock attributable to chattering.
(5) Since the signal indicating that the card-type electronic circuit 101 is mounted in the electronic device 102 is input to an interrupt input port of the MPU 108, the presence of the card-type electronic circuit 101 can be detected even while the MPU 108 is engaged in other processing.

### INDUSTRIAL APPLICABILITY

It is to be noted that while the electronic device 102 described above may be, for instance, an electronic still camera, a video camera, a mobile telephone or a mobile information terminal device, the present invention may also be adopted in various types of electronic devices in which all types of external electronic circuits such as the PC card mentioned above, utilized as external recording media are mounted. Inaddition, the functions (1) ~ (5) described above do not need to be realized through the embodiment and may be realized through various other circuits and algorithms instead.

## Claims

1. A power supply switch circuit in an electronic device in which an external electronic circuit is detachably mounted, comprising;
a switch circuit that turns ON/OFF power supply;
a detection circuit that detects whether or not said external electronic circuit is mounted; and
a switch control circuit that closes said switch circuit when a predetermined length of time elapses after said detection circuit detects that said external electronic circuit is mounted and immediately opens said switch circuit when said detection circuit detects that said external electronic circuit is not mounted.

2. A power supply switch circuit according to claim 1 further comprising;
an input/output unit that is capable of switching an input/output signal to be provided to said external electronic circuit to a signal connecting state in which the signal is able to be input/output or a high impedance state, wherein;
said input/output unit is switched to the signal connecting state if said switch circuit is closed and is switched to the high impedance state if said switch circuit is open.

3. A power supply switch circuit according to claim 1, wherein;
said switch control circuit includes a flip-flop circuit, and closes said switch circuit by setting an output from said flip-flop circuit when a predetermined length of time elapses after said detection circuit detects that said external electronic circuit is mounted and immediately opens said switch circuit by resetting the output of said flip-flop circuit when said detection circuit detects that said external electronic circuit is not mounted.

4. A power supply switch circuit according to claim 1, wherein;
said external electronic circuit is either a PC card or a CF card.

5. A power supply switch circuit according to claim 4, wherein;
said electronic device is provided with a connector at which said external electronic circuit is mounted;
said connector includes a longest pin used for power supply, a medium-length pin used for data signal exchange and a shortest pin used for detecting whether or not said external electronic circuit is mounted; and
said detection circuit detects whether or not said external electronic circuit is mounted by using a signal from said shortest pin.

6. An electronic device in which an external electronic circuit is detachably mounted, comprising;
a switch circuit that turns ON/OFF power supply;
a detection circuit that detects whether or not said external electronic circuit is mounted; and
a switch control circuit that closes said switch circuit when a predetermined length of time elapses after said detection circuit detects that said external electronic circuit is mounted and immediately opens said switch circuit when said detection circuit detects that said external electronic circuit is not mounted.

7. An electronic device according to claim 6 further comprising;
an input/output unit that is capable of switching an input/output signal to be provided to said external electronic circuit to a signal connecting state in which the signal is able to be input/output or a high impedance state, wherein;
said input/output unit is switched to the signal connecting state if said switch circuit is closed and is switched to the high impedance state if said switch circuit is open.

8. An electronic device according to claim 6, wherein;
said switch control circuit includes a flip-flop circuit, and closes said switch circuit by setting an output from said flip-flop circuit when a predetermined length of time elapses after said detection circuit detects that said external electronic circuit is mounted and immediately opens said switch circuit by resetting the output of said flip-flop circuit when said detection circuit detects that said external electronic circuit is not mounted.

9. An electronic device according to claim 6, wherein;
said external electronic circuit is either a PC card or a CF card.

10. An electronic device according to claim 9, further comprising;
a connector at which said external electronic circuit is mounted, wherein;
said connector includes a longest pin used for power supply, a medium-length pin used for data signal exchange and a shortest pin used for detecting whether or not said external electronic circuit is mounted; and
said detection circuit detects whether or not said external electronic circuit is mounted by using a signal from said shortest pin.
